# EUROPÄISCHE PATENTSCHRIFT

(11) **EP 0 596 309 B1**
(45) Veröffentlichungstag und Bekanntmachung des Hinweises auf die Patenterteilung: **14.01.1998**
(21) Anmeldenummer: 93116773.8
(22) Anmeldetag: 18.10.1993
(51) Int. Cl.: C08G 12/30, C09D 167/00, C09D 163/00, C09D 133/00

(54) **Triazin-Formaldehyd-Harz**
Triazine formaldehyde resin
Résine triazine formaldéhyde

(30) Priorität: 06.11.1992 DE 4237515
(43) Veröffentlichungstag der Anmeldung: 11.05.1994
(73) Patentinhaber: HOECHST AKTIENGESELLSCHAFT, 65926 Frankfurt am Main (DE)
(72) Erfinder: Schön, Manfred, Dr., D-63110 Rodgau (DE); Ott, Jürgen, Dr., D-61118 Bad Vilbel (DE); Kubillus, Uwe, Dr., D-65195 Wiesbaden (DE); Tas, Elif, D-65195 Wiesbaden (DE)

(56) Entgegenhaltungen:
- EP-A- 0 406 810
- EP-A- 0 415 371
- EP-A- 0 542 360
- GB-A- 742 046
- JOURNAL OF POLYMER SCIENCE, POLYMER CHEMISTRY EDITION Bd. 19 , 1981 , NEW YORK US Seiten 645 - 654 TATSUO TASHIRO ET ALL. 'Reactions of 2-Methoxy- and 2-Substituted 4,6-Diamino-s-Triazines with Formaldehyde: Kinetics and Adaptability of the Rate Constants to Hammett and Taft Equations.'

## Beschreibung

Die vorliegende Erfindung betrifft ein Triazin-Formaldehyd-Harz, ein Verfahren zu seiner Herstellung und seine Verwendung als Härter in Lacksystemen.

Die Verwendung von methyl, butyl- bzw. isobutylveretherten Melamin-Formaldehyd-Harzen in Einbrennlack-Systemen ist seit langem bekannt. Mit diesen Melamin-Formaldehyd-Harzen eingebrannte Filme weisen hohe Sprödigkeit auf, weshalb auf plastifizierende, hydroxylgruppenhaltige Bindemittel, die im Festkörperverhältnis von 60:40 bis 90:10 (Bindemittel: MF-Harz) eingesetzt werden, nicht verzichtet werden kann.

Verbesserungen in dieser Hinsicht können erreicht werden, wenn Benzoguanamin und dessen Umsetzungsprodukte mit Formaldehyd und Veretherungsalkoholen eingesetzt werden. Benzoguanaminharze weisen eine deutlich höhere Flexibilität, Haftung und auch chemische Beständigkeit gegenüber wäßrigen Agenzien, wie Salz- und Waschlaugen auf. Bekannt ist jedoch auch deren hohe Empfindlichkeit gegenüber Lichteinwirkung, die zu rascher Vergilbung bzw. Farbtonänderung führt. Aus diesem Grunde ist der Einsatz dieser Harze auf Grundierungen bzw. Haushaltsgeräte beschränkt, die keiner direkten Sonneneinstrahlung ausgesetzt sind.

In der Literatur ist die Verwendung weiterer Guanaminderivate beschrieben, beispielsweise von aliphatischen Guanaminen, deren aliphatischer Rest 1 bis 8 Kohlenstoffatome enthält, in Elektrotauchlackierungen in US 3.663.389, US 3.894.993 und US 3.945.961. In der US 4.221.683 werden bei tiefer Temperatur härtende Amino-Formaldehyd-Harze auf Basis aliphatischer und aromatischer Guanamine genannt.

EP 292.306 und EP 303.441 beschreiben veretherte Methylolaminotriazin-Kondensate mit Cyclohexyl- und Norbornyl-Substituenten, die in der Wetterbeständigkeit, Glanz und Flexibilität Vorteile bieten. Nachteile bestehen in der Reaktivität und dem erreichbaren Lackfestkörper.

Durch Verwendung von veretherten und methylolierten, aliphatischen Guanaminen in einer möglichst monomeren Form sollen diese Nachteile behebbar sein (EP 422.402).

Die vorliegende Erfindung betrifft ein Triazin-Formaldehyd-Harz, gekennzeichnet durch einen Gehalt einer Verbindung der allgemeinen Formel I 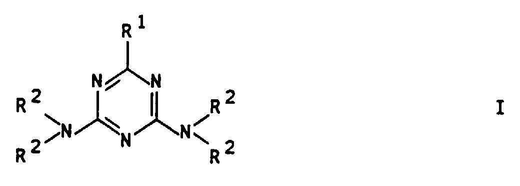 worin
- R¹: Di-(C₁-C₆)-alkylamino, Dicyclohexylamino, Diphenylamino, Morpholino, Piperidino oder Pyrrolidino bedeutet; und von den vier Substituenten R²

a) 0-3 Wasserstoff bedeuten;
b) 1-4 R³OCH₂-, worin R³ Wasserstoff oder (C₁-C₄)-Alkyl bedeuten; und
c) 0-4 einen Rest der allgemeinen Formel II 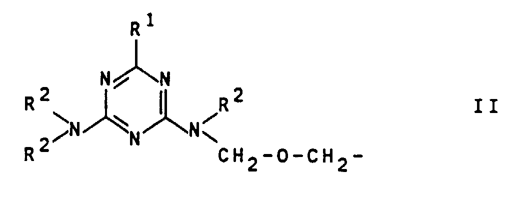 und/oder einen Rest der allgemeinen Formel III 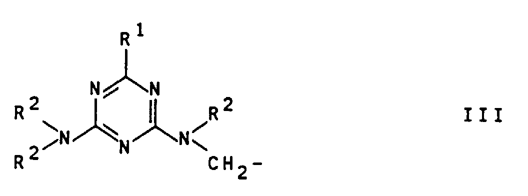
worin
R¹ und R² die oben genannten Bedeutungen haben, bedeuten.

In der allgemeinen Formel I bedeutet R¹ bevorzugt Di-(C₁-C₆)-Alkylamino und besonders bevorzugt Diethylamino.

Die erfindungsgemäßen Triazin-Formaldehyd-Harze enthalten die Verbindungen der allgemeinen Formel I in Mengen von bevorzugt 60 bis 80 Gew.%, das heißt der Festkörpergehalt beträgt bevorzugt 60 bis 80 Gew.%.

Daneben enthalten die erfindungsgemäßen Triazin-Formaldehyd-Harze bevorzugt ein (C₁-C₄)-Alkanol in Mengen von bevorzugt 20 bis 40 Gew.%. Besonders geeignete (C₁-C₄)Alkanole sind n-Butanol und i-Butanol.

Die erfindungsgemäßen Triazin-Formaldehyd-Harze sind üblicherweise niedrigviskose bis mittelviskose Flüssigkeiten. Ein bevorzugter Viskositätsbereich ist 10 bis 500 Sekunden Auslaufzeit, DIN 4-mm-Becher, ein besonders bevorzugter Bereich ist 10 bis 300 Sekunden Auslaufzeit, DIN 4-mm-Becher.

Die erfindungsgemäßen Triazin-Formaldehyd-Harze können dadurch hergestellt werden, daß eine Verbindung der allgemeinen Formel IV 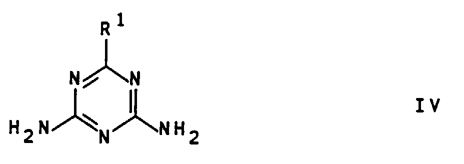 worin
R¹ wie oben angegeben definiert ist, mit Formaldehyd methyloliert, mit einem (C₁-C₄)-Alkanol verethert, entstandenes Wasser entfernt und das so erhaltene Produkt mit einem (C₁-C₄)-Alkanol auf den gewünschten Festkörpergehalt eingestellt wird.

Die Umsetzung der Verbindung der allgemeinen Formel IV mit Formaldehyd wird bevorzugt bei Temperaturen von 0 bis 150°C und einem pH-Wert von 3 bis 11 durchgeführt.

Die genauen Umsetzungsbedingungen richten sich dabei, ebenso wie das Verhältnis von Verbindung der allgemeinen Formel IV zu Formaldehyd, insbesondere danach, ob partiell oder vollständig methyloliert werden soll. Analoges gilt auch für die Veretherung mit einem (C₁-C₄)- Alkohol.

Üblicherweise werden Methylolierung und Veretherung im Eintopfverfahren ausgeführt.

Bevorzugte (C₁-C₄)-Alkohole für die Veretherung sind dabei Methanol, n-Butanol und i-Butanol.

Die Verbindungen der allgemeinen Formel IV können ausgehend von Melamin durch selektive Bisalkylierung oder durch Umsetzung mit einem Amin H-R¹, wobei R¹ wie oben angegeben definiert ist, unter Verdrängung von Ammoniak hergestellt werden.
Alternativ können die Amine H-R¹ auch mit 6-Chlor-2,4-diamino-s-triazin umgesetzt werden.

Die erfindungsgemäßen Triazin-Formaldehyd-Harze lassen sich mit konventionellen oder wasserlöslichen bzw. selbstemulgierenden hydroxylgruppenhaltigen fremdvernetzenden Bindemitteln, wie Alkyd-, Polyester- oder Acrylharzen als auch mit Epoxidharzen kombinieren und zu beständigen und harten Filmen aushärten.

Bei Gewichtsverhältnissen Bindemittel: erfindungsgemäßes Harz von 60:40 bis 90:10 ist dabei die Aushärtung bei Temperaturen von 100 bis 180°C in ca. 20 Minuten erfolgt. Die Aushärtung kann unkatalysiert oder katalysiert erfolgen, wobei geeignete Katalysatoren z. B. Aminsalze der p-Toluolsulfonsäure sind.

Die erfindungsgemäßen Triazin-Formaldehyd-Harze können deshalb in hervorragender Weise als Härter in Lacksystemen auf Basis von hydroxylgruppenhaltigen Alkyd-, Polyester- oder Acrylharzen oder Epoxidharzen und/oder deren Mischungen eingesetzt werden.

Die vorliegende Erfindung betrifft auch Lacksysteme auf Basis von hydroxylgruppenhaltigen Alkyd-, Polyester- oder Acrylharzen oder Epoxidharzen und/oder deren Mischungen, dadurch gekennzeichnet, daß sie ein erfindungsgemäßes Triazin-Formaldehyd-Harz enthalten.

Die erfindungsgemäßen Lacksysteme können wäßrig oder nicht wäßrig sein. Beispiele für erfindungsgemäße Lacksysteme sind solche für Haushaltsgeräte beispielsweise Waschmaschinen, Kühlschränke oder Herde, insbesondere aber für den Automobilsektor. Erfindungsgemäße Lacksysteme für den Automobilsektor sind insbesondere Einbrennfüller, Basislacke, Klarlacke und Decklacke.

Die erfindungsgemäßen Lacksysteme weisen bevorzugt ein Gewichtsverhältnis Alkyd-, Polyester- oder Acrylharz oder Epoxidharz : erfindungsgemäßem Harz von 60:40 bis 90:10 auf. Sie können im Falle von Füller-, Basis-, Deck- oder Klarlacksystemen im Einbrennbereich von 100 bis 200°C und einer Einbrennzeit von 10 bis 40 Minuten beziehungsweise im Falle von Basislacksystemen im forcierten Trocknungsbereich von 5 bis 20 Minuten bei 50 bis 90°C verwendet werden.

Die erfindungsgemäßen Lacksysteme können Hilfs- und Zusatzmittel enthalten, insbesondere die üblichen Lackadditive. Solche Lackadditive sind beispielsweise anorganische oder organische (Farb-)Pigmente, Füllstoffe, Antiabsetzmittel, Entschäumungs- und/oder Netzmittel, Verlaufmittel, Reaktiv-Verdünner, Weichmacher, (UV-)Stabilisatoren, Katalysatoren, Rheologiehilfsmittel, wie z.B. Mikrogele oder Polyharnstoffderivate oder zusätzliche Härter. Gegebenenfalls können die genannten Additive den erfindungsgemäßen Lacksystemen auch erst unmittelbar vor der Verarbeitung zugegeben werden.

Durch den Einsatz der erfindungsgemäßen Triazin-Formaldehyd-Harze bzw. der erfindungsgemäßen Lacksysteme werden Lackschichten hoher Qualität erhalten, beispielsweise steinschlagfeste Einbrennfüller mit guter Schleifbarkeit, Zwischenschichthaftung und hoher Härte, Basislacke mit schneller physikalischer Trocknung, gutem optischen Effekt und Zwischenschichthaftung, Klarlacke mit hohem Glanz und hoher Härte, guter Bewitterungsstabilität und hoher Elastizität auch bei höheren Einbrenntemperaturen sowie Decklacke mit hohem Glanz und hoher Beständigkeit. Im Vergleich zu den mit handelsüblichen Benzoguanaminharzen erhaltenen Lacken zeichnen sich die erfindungsgemäßen durch eine erhöhte Reaktivität, verbesserte Überbrenntoleranz, verminderte Wasseraufnahme mit deshalb verbesserten Schwitzwasser-Testergebnissen nach DIN 51 017 als auch deutlich verbesserter Lichtbeständigkeit aus.

In den folgenden Beispielen werden folgende Warenzeichen verwendet.
®Blanc fix micro ist ein eingetragenes Warenzeichen der Sachtleben Chemie GmbH, Duisburg, Bundesrepublik Deutschland.
®Printex und ®Aerosil sind eingetragene Warenzeichen der Degussa AG, Frankfurt am Main, Bundesrepublik Deutschland.
®Polysolvan, ®Additol, ®Synthacryl, ®Alftalat und ®Resamin sind eingetragene Warenzeichen der Hoechst AG, Frankfurt am Main/Höchst, Bundesrepublik Deutschland.
®Maprenal ist ein eingetragenes Warenzeichen der Cassella AG, Frankfurt am Main/Fechenheim, Bundesrepublik Deutschland
®Stapa-Mobil ist ein eingetragenes Warenzeichen der Eckart-Werke, Standard Bronzepulver-Werke Carl Eckart, GmbH & Co., Fürth, Bundesrepublik Deutschland.
®Tinuvin ist ein eingetragenes Warenzeichen der Ciba-Geigy AG, Basel, Schweiz.
®Kristallöl ist ein eingetragenes Warenzeichen der Deutsche Shell AG, Hamburg, Bundesrepublik Deutschland.
®Nacure ist ein eingetragenes Warenzeichen der King Industries, Inc. Norwalk, Conn., USA.
®Solvesso ist ein eingetragenes Warenzeichen der Exxon, USA.

### Beispiel 1

Eine Mischung von 2,4-Diamino-6-diethylaminotriazin (100 g 0,549 mol), 90% Paraformaldehyd (83,3 g 2,50 mol) und n-Butanol (121,8 g 1,646 mol) wird für 2 h 45 min auf 80°C erhitzt. Dann werden 1 ml einer 10%igen Sodalösung hinzugegeben und solange am Wasserabscheider erwärmt, bis sich weniger als 1 ml Wasser/5 min abscheiden. Unter vermindertem Druck (0,1 bar) werden 80 ml n-Butanol abdestilliert, auf einen Feststoffgehalt von ca. 70% eingestellt, über Celite filtriert (70°C) und anschließend mit n-Butanol auf einen Festkörpergehalt von 62% gebracht.

### Beispiel 2

100 g (0,549 mol) 2,4-Diamino-6-diethylaminotriazin, 83,3 g (2,50 mol) 90% Paraformaldehyd und 121,8 g (1,646 mol) iso-Butanol werden 2 h 45 min bei 80°C umgesetzt. Nach Zugabe von 1 ml einer 10%igen Sodalösung werden die flüchtigen Bestandteile unter vermindertem Druck soweit entfernt (50°C, 25 mbar), daß der Festkörpergehalt 75% beträgt. Anschließend wird mit n-Butanol verdünnt, heiß über Celite filtriert und auf einen Festkörpergehalt von 62% eingestellt.

### Beispiel 3

100 g (0,549 mol) 2,4-Diamino-6-diethylaminotriazin, 82,4 g (2,472 mol) 90% Paraformaldehyd und 140,6 g (4,394 mol) Methanol werden 3 h unter Rückfluß erhitzt und die Reaktionsmischung mit 10%iger Sodalösung auf einen pH-Wert von 10,0 gebracht. Unter vermindertem Druck (100 mbar) wird bis zu einer Innentemperatur von 108°C eingeengt, 100 ml iso-Butanol hinzugegeben, bei 70°C über Celite filtriert und anschließend auf einen Festkörpergehalt vor 62 % eingestellt.

### Beispiel 4

Es wurde ein Automobil-Einbrennfüller auf Basis eines handelsüblichen ölfreien Polyesterharzes folgender Rezeptur hergestellt:

| | Gew.Teile |
|---|---|
| handelsübliches ölfreies Polyesterharz, 70% Xylol (Säurezahl max. 10, dyn. Viskosität (Lieferform, 23°C): 2300 - 3100 mPas) z.B. ®Alftalat AN 950 | 65,40 |
| | |
| Titandioxid RN 59 | 32,60 |
| ®Blanc fixe micro | 32,60 |
| Ruß®Printex 300 | 0,20 |
| ®Aerosil 380 | 1,00 |
| ®Polysolvan O | 12,20 |
| Ethoxypropylacetat | 13,00 |
| ®Solvesso 150 | 10,00 |
| ®Additol XL 480 | 0,40 |
| Isobutanol | 3,40 |
| Harz gemäß Beispiel 1 | 31,64 |
| Verdünnung: ®Solvesso 100 | 33,00 |

Einbrennbedingung: 15 min bei 150°C.

Es wurden folgende Daten gemessen:

| | |
|---|---|
| Verarbeitungsviskosität, DIN 4-mm-Becher, 23°C | 21s |
| Verarbeitungsfestkörper (1 h, 120°C) | 57% |
| Pendelhärte | 157 König Sekunden |
| Glanz 20°/60° | 23%/67% |

Zum Vergleich wurde das obige Beispiel wiederholt mit dem Unterschied, daß das Harz gemäß Beispiel 1 durch 29,20 Gewichtsteile eines handelsüblichen n-butylveretherten Melamin-Formaldehyd-Harzes (ca. 67% n-Butanol/Xylol, dyn. Viskosität (Lieferform, 23°C): 600 -900 mPas), z.B. ®Ma-prenal VMF 3610 ersetzt wurde. Zur Verdünnung wurden 34,00 Gewichtsteile ®Solvesso 100 eingesetzt:

Es wurden folgende Daten gemessen:

| | |
|---|---|
| Verarbeitungsviskosität, DIN 4-mm-Becher,23°C | 21 s |
| Verarbeitungsfestkörper (1 h, 120°C) | 55 % |
| Pendelhärte | 160 König-Sekunden |
| Glanz 20°/60° | 15%/59% |

### Beispiel 5

Es wurde ein Metallic-Basislack auf Basis eines handelsüblichen ölfreien Polyesterharzes folgender Rezeptur hergestellt:

| | Gew.Teile |
|---|---|
| handelsübliches ölfreies Polyesterharz, 70% Xylol (Säurezahl max 10, dyn.Viskosität (Lieferform, 23°C): 2300 - 3100 mPas) z.B. ®Alftalat AN 950 | 30,00 |

| | Gew.Teile |
|---|---|
| ®Resamin HF 450 | 5,00 |
| ®Stapa-Mobil R 167 | 10,00 |
| Xylol | 12,00 |
| CAB-Lösung 381-0.1 18% Butylacetat | 110,00 |
| Harz gemäß Beispiel 1 | 8,34 |
| ®Aerosil 200 | 1,80 |
| Butylglykol | 10,00 |
| Butylacetat/Xylol (1:1) | 11,80 |
| Xylol/Butylacetat/®Solvesso 100 (25:60:15) | 62,00 |

Es wurden folgende Daten gemessen:

| | |
|---|---|
| Viskosität, 23°C, DIN 4-mm-Becher | 49 s |
| Verarbeitungsviskosität | 15 s |
| Verarbeitungsfestkörper (1 h, 125°C) | 20 % |

Zum Vergleich wurde das obige Beispiel wiederholt mit dem Unterschied, daß das Harz gemäß Beispiel 1 ersetzt wurde durch 9,40 Gewichtsteile eines handelsüblichen mit Isobutanol partiell verethertem Melamin-Formaldehyd-Harzes (ca. 55%ig in Isobutanol/Xylol 44:1, Molverhältnis Melamin : Formaldehyd = 1:4, dyn. Viskosität (Lieferform, 23°C): 260 - 460 mPas), z.B. ®Maprenal MF 590.

Es wurden folgende Daten gemessen:

| | |
|---|---|
| Viskosität, 23°C, DIN 4-mm-Becher | 34 s |
| Verarbeitungsviskosität | 15 s |
| Verarbeitungsfestkörper (1 h, 125°C) | 20 % |

### Beispiel 6

Es wurde ein Klarlack auf Basis handelsüblicher, fremdvernetzender Acrylharze folgender Rezeptur hergestellt:

| | Gew.Teile |
|---|---|
| handelsübliches fremdvernetzendes Acrylharz (65%ig gelöst in Xylol/Butanol 3:1, dyn. Viskosität (50%ig in Xylol): 1140 mPas/20°C, Säurezahl 13), z.B. ®Synthacryl SC 303. | 53,85 |
| | |
| handelsübliches fremdvernetzendes Acrylharz (75%ig gelöst in ®Solvesso 100, dyn. Viskosität: 295 mPas/20°C, Säurezahl 10), z.B. ®Synthacryl SC 370 | 46,67 |
| | |
| Harz gemäß Beispiel 1 | 48,39 |
| ®Tinuvin 292 | 1,00 |
| ®Tinuvin 1130 | 1,00 |
| Isobutanol | 10,00 |
| ®Solvesso 150 | 6,00 |
| ®Kristallöl K 30 | 18,00 |
| ®Solvesso 100 | 38,00 |
| ®Additol XL 121 | 0,23 |

Es wurden folgende Daten gemessen:

| | |
|---|---|
| Viskosität, 23°C, DIN 4-mm-Becher | 26 s |
| Verarbeitungsfestkörper (1 h, 125°C) | 43 % |

| Pendelhärte: | König-Sekunden | | | | | | |
|---|---|---|---|---|---|---|---|
| | 100°C | 110°C | 120°C | 130°C | 140°C | 150°C | 160°C |
| | 76 s | 133 s | 161 s | 173 s | 173 s | 175 s | 176 s |
| Gitterschnitt | 1 | 1 | 1 | 1-2 | 1-2 | 2 | 2 |
| Superbenzinbest.(min) | <1 | <1 | <1 | <1 | <3 | <3 | <3 |
| Erichsentiefung (mm) | 10,0 | 9,7 | 9,6 | 9,4 | 9,3 | 8,7 | 8,1 |
| Schwitzwassertest (240 h 40°C, 100% rel.Luftf.) | Weißanlaufen - in Ordnung - | | | | | | |

a) Zum Vergleich wurde das obige Beispiel wiederholt mit dem Unterschied, daß das Harz gemäß Beispiel 1 ersetzt wurde durch 54,55 Gewichtsteile eines handelsüblichen, mit Isobutanol partiell veretherten Melamin-Formaldehyd-Harzes (ca. 55%ig in Isobutanol/Xylol 44:1, Molverhältnis Melamin : Formaldehyd = 1:4, dyn. Viskosität (Lieferform, 23°C): 300 - 500 mPas), z.B. ®Maprenal MF 650. Zur Einstellung der Spritzviskosität wurden 34 Teile Solvesso 100 verwendet.
Es wurden folgende Daten gemessen:

| | |
|---|---|
| Viskosität, 23°C, DIN 4-mm-Becher | 26 s |
| Verarbeitungsfestkörper (1 h, 125°C) | 43 % |

| Pendelhärte: | König-Sekunden | | | | | | |
|---|---|---|---|---|---|---|---|
| | 100°C | 110°C | 120°C | 130°C | 140°C | 150°C | 160°C |
| | 75 s | 102 s | 142 s | 164 s | 173 s | 175 s | 180 s |
| Gitterschnitt | 1 | 1 | 2 | 3 | 3 | 4 | 4 |
| Superbenzinbest.(min) | <1 | <1 | <1 | <3 | >10<15 | >10<15 | >10<15 |
| Erichsentiefung (mm) | 9,9 | 9,8 | 9,6 | 8,8 | 8,1 | 7,4 | 4,9 |
| Schwitzwassertest (240 h 40°C 100% rel.Luftf.) | Weißanlaufen - in Ordnung - | | | | | | |

b) In einem weiteren Vergleich wurde das Harz gemäß Bei spiel 1 ersetzt durch 48,39 Gewichtsteile eines handelsüblichen, mit n-Butanol veretherten Benzoguanaminharzes (ca. 62%ig in n-Butanol gelöst, dyn. Viskosität (Lieferform, 23°C): 140 - 230 mPas), z.B. ®Maprenal MF 980. Zur Einstellung der Spritzviskosität wurden 32 Teile Solvesso 100 verwendet.
Es wurden folgende Daten gemessen:

| | |
|---|---|
| Viskosität, 23°C, DIN 4-mm-Becher | 26 s |
| Verarbeitungsfestkörper (1 h, 125°C) | 43 % |

| Pendelhärte: | König-Sekunden | | | | | | |
|---|---|---|---|---|---|---|---|
| | 100°C | 110°C | 120°C | 130°C | 140°C | 150°C | 160°C |
| | 35 s | 63 s | 105 s | 165 s | 183 s | 192 s | 195 s |
| Gitterschnitt | 0 | 0-1 | 1-2 | 1-2 | 2 | 2 | 2 |
| Superbenzinbest.(min) | <1 | <1 | <1 | <1 | <2 | <3 | <5 |
| Erichsentiefung (mm) | 10,5 | 10,0 | 9,8 | 9,6 | 9,4 | 9,0 | 8,4 |
| Schwitzwassertest (240 h 40°C, 100% rel.Luftf.) | Weißanlaufen - Fleckenbildung- in Ordnung - | | | | | | |

c) In einem weiteren Vergleich wurde das Harz gemäß Beispiel 1 ersetzt durch 44,78 Gewichtsteile eines handelsüblichen n-butylveretherten Melamin-Formaldehyd-Harzes -Harzes (ca. 67% n-Butanol/Xylol, dyn. Viskosität (Lieferform, 23°C): 600 - 700 mPas), zum Beispiel ®Maprenal VMF 3610.Zur Einstellung der Spritzviskosität wurden 44 Teile Solvesso 100 verwendet.
Es wurden folgende Daten gemessen:

| | |
|---|---|
| Viskosität, 23°C, DIN 4-mm-Becher | 25s |
| Verarbeitungsfestkörper (1h, 125°C) | 43% |

| Pendelhärte: | König-Sekunden | | | | | | |
|---|---|---|---|---|---|---|---|
| | 100°C | 110°C | 120°C | 130°C | 140°C | 150°C | 160°C |
| | 45 s | 68 s | 122 s | 152 s | 160 s | 163 s | 163 s |
| Gitterschnitt: | 0 | 0-1 | 1 | 1-2 | 3 | 4 | 4 |
| Xylol-Festigkeit(min): | <1 | <1 | <1 | <3 | >5<10 | >20<25 | >20<25 |
| Schwitzwassertest (240h, 40°C 100% rel.Luftf.) | Weißanlaufen - in Ordnung - | | | | | | |

Von dem erfindungsgemäßen Klarlack und denen des Standes der Technik gemäß a) und b) wurde der Glanzverlauf (%) 20°, effektiv nach Stunden im Kantenfilter A, Weather-o-meter, bestimmt.

Folgende Ergebnisse wurden erhalten:

| nach Std. | erfindungsgemäß | Stand der Technik | |
|---|---|---|---|
| | | a) | b) |
| 0 | 90,0 | 87,0 | 90,0 |
| 250 | 89,0 | 90,0 | 87,0 |
| 500 | 86,0 | 87,0 | 40,0 |
| 750 | 83,0 | 85,0 | 20,0 |
| 1000 | 81,0 | 81,0 | - |
| 1250 | 78,0 | 82,0 | - |
| 1500 | 73,0 | 80,0 | - |
| 1750 | 67,0 | 77,0 | - |
| 2000 | - | 77,0 | - |
| 2250 | - | 73,0 | - |
| 2500 | - | 67,0 | - |

### Beispiel 7

Es wurde eine Gesamtaufbauprüfung, bestehend aus Einbrennfüller gemäß Beispiel 4, Metallic-Basislack gemäß Beispiel 5 und Klarlack gemäß Beispiel 6, vorgenommen.

Einbrennbedingungen:

| | | |
|---|---|---|
| Füller | 15 min | 150°C |
| Basecoat | 5 min | RT |
| Klarlack | 20 min | 140°C |

Es wurden folgende Daten gemessen:

| | |
|---|---|
| Pendelhärte: | 149 s |
| Gitterschnitt | Gt 0 |
| Steinschlag-Test VDO | KW₄ |
| Wasseraufnahme bei Schwitzwassertest (240 h, 40°C, 100% rel. Luftf.) | keine Wasseraufnahme |

Zum Vergleich wurde eine Gesamtaufbauprüfung, bestehend aus Einbrennfüller gemäß Vergleichsbeispiel 4, Metallic-Basislack gemäß Vergleichsbeispiel 5 und Klarlack gemäß Vergleichsbeispiel 6c, vorgenommen.

Es wurden folgende Daten gemessen:

| | |
|---|---|
| Pendelhärte | 138s |
| Gitterschnitt | Gt 0 |
| Steinschlag-Test VDO | KW₄ |
| Wasseraufnahme bei Schwitzwassertest | 0,4g/200cm² Fläche (240h, 40°C, 100% rel. Luftf.). |

### Beispiel 8

Es wurde ein wäßriger Einbrennklarlack auf Basis eines handelsüblichen wasserverdünnbaren Acrylharzes folgender Rezeptur hergestellt:

| | Gew.Teile |
|---|---|
| handelsübliches wasserverdünnbares Acrylatharz (ca. 46%ig gelöst in Wasser/n-BuOH 5/1, Hydroxylzahl ca. 100 mg KOH/g Festharz, pH-Wert ca. 6,8 - 7,2, dyn. Viskosität (Lieferform, 20°C): 100 - 500 mPas), z.B. ®Synthacryl VSW 1500 | 80,00 |
| | |
| Harz gemäß Beispiel 1 | 15,00 |
| ®Additol XW 390 auf 5% Wirkstoffgehalt in Wasser verdünnt | 0,60 |
| ®Nacure 2500, 25% (Lieferform) | 0,37 |
| Propylenglykol/Wasser-Gemisch (1:1) | 4.03 |

Der pH-Wert wurde mit Dimethylethanolamin (DMEA) auf 8 eingestellt. Das Harz/Härter-Verhältnis betrug 80 : 20.

Es wurden folgende Daten gemessen:
Pendelhärte, Einbrennzeit: 20 min

| | | | | | | | | |
|---|---|---|---|---|---|---|---|---|
| 100°C | 110°C | 120°C | 130°C | 140°C | 150°C | 160°C | 170°C | 180°C |
| 57 s | 69 s | 78 s | 82 s | 80 s | 77 s | 72 s | 75 s | 62 s |

### Beispiel 9

Beispiel 8 wurde wiederholt, mit dem Unterschied, daß das Harz gemäß Beispiel 1 in einer Menge von 22,50 Gewichtsteilen und das Propylenglykol/Wassergemisch in einer Menge von 1,53 Gewichtsteilen eingesetzt wurde. Das Harz/Härter-Verhältnis betrug 70 : 30.

Es wurden folgende Daten gemessen:
Pendelhärte, Einbrennzeit: 20 min

| | | | | | | | | |
|---|---|---|---|---|---|---|---|---|
| 100°C | 110°C | 120°C | 130°C | 140°C | 150°C | 160°C | 170°C | 180°C |
| 131 s | 130 s | 143 s | 144 s | 141 s | 132 s | 111 s | 91 s | 98 s |

Zum Vergleich wurde das obige Beispiel wiederholt mit dem Unterschied, daß das Harz gemäß Beispiel 1 ersetzt wurde durch 22,50 Gewichtsteile eines handelsüblichen, mit n-Butanol veretherten Benzoguanaminharzes (ca. 62%ig in n-BuOH gelöst, dyn. Viskosität (Lieferform, 23°C): 140 - 230 mPas), z.B. ®Maprenal MF 980.

Es wurden folgende Daten gemessen:
Pendelhärte, Einbrennzeit: 20 min

| | | | | | | | | |
|---|---|---|---|---|---|---|---|---|
| 100°C | 110°C | 120°C | 130°C | 140°C | 150°C | 160°C | 170°C | 180°C |
| 76 s | 113 s | 135 s | 147 s | 144 s | 134 s | 120 s | 94 s | 100 s |

### Beispiel 10

Beispiel 6 wurde wiederholt mit dem Unterschied, daß das Harz gemäß Beispiel 1 durch 48,39 Teile des Harzes gemäß Beispiel 2 ersetzt wurde. Zur Einstellung der Spritzviskosität wurden 45 Teile Solvesso 100 verwendet.

Es wurden folgende Daten gemessen:

| | |
|---|---|
| Verarbeitungsviskosität, DIN 53211, 23°C | 26s |
| Verarbeitungsfestkörper (1 h, 125°C) | 43% |

| Pendelhärte: | König-Sekunden | | | | | | |
|---|---|---|---|---|---|---|---|
| | 100°C | 110°C | 120°C | 130°C | 140°C | 150°C | 160°C |
| | 102 s | 143 s | 170 s | 175 s | 178 s | 178 s | 179 s |
| Gitterschnitt | 1-2 | 2 | 2 | 2 | 2-3 | 2-3 | 2-3 |
| Superbenzinbest.(min) | | <1 | <1 | <1 | <1 | <2 | <2<2 |
| Erichsentiefung (mm) | | 10,1 | 9,4 | 9,3 | | 9,2 | 98,78,2 |
| Schwitzwassertest (240 °C, 40°C, 100% rel.Luftf.) | Weißanlaufen - in Ordnung - | | | | | | |

### Beispiel 11

Es wurde ein Klarlack auf Basis handelsüblicher, fremdvernetzender Acrylharze folgender Rezeptur hergestellt:

| | Gew.Teile |
|---|---|
| handelsübliches fremdvernetzendes Acrylharz (65%ig gelöst in Xylol/Butanol 3:1, dyn. Viskosität (50%ig in Xylol): 1140 mPas/20°C, Säurezahl 13), z.B. ®Synthacryl SC 303 | 26,32 |

| | Gew.Teile |
|---|---|
| handelsübliches fremdvernetzendes Acrylharz (75%ig gelöst in ®Solvesso 100, dyn. Viskosität: 295 mPas/20°C, Säurezahl 10), z.B. ®Synthacryl SC 370 | 23,33 |
| | |
| Harz gemäß Beispiel 3 | 24,19 |
| ®Tinuvin 292 | 0,50 |
| ®Tinuvin 1130 | 0,50 |
| Isobutanol | 5,00 |
| ®Solvesso 150 | 3,00 |
| ®Kristallöl K 30 | 9,00 |
| ®Solvesso 100 | 15,00 |
| ®Additol XL 121 | 0,11 |

Es wurden folgende Daten gemessen:

| | |
|---|---|
| Viskosität, 23°C, DIN 53211 | 26 s |

| Pendelhärte: | König-Sekunden | | | | | | |
|---|---|---|---|---|---|---|---|
| | 100°C | 110°C | 120°C | 130°C | 140°C | 150°C | 160°C |
| | 64 s | 113 s | 171 s | 175 s | 178 s | 178 s | 178 s |
| Gitterschnitt | 1-2 | 1-2 | 2 | 2 | 2 | 2 | 2 |
| Superbenzin best (min) | | <1 | <1 | <1 | <1 | <1 | <2<2 |
| Schwitzwassertest (240h 40°C, 100% rel.Luftf.) | Weißanlaufen - in Ordnung - | | | | | | |

## Patentansprüche

1. Partiell oder vollständig veräthertes Triazin-Formaldehyd-Harz, gekennzeichnet durch einen Gehalt einer Verbindung der allgemeinen Formel I 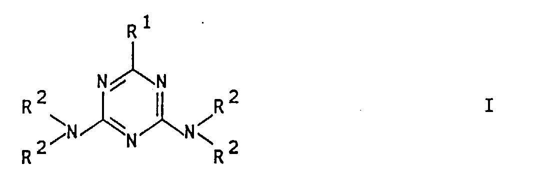 worin
R¹ Di-(C₁-C₆-Alkylamino, Dicyclohexylamino, Diphenylamino, Morpholino, Piperidino oder Pyrrolidino bedeutet;
und von den vier Substituenten R²
a) 0 - 3 Wasserstoff bedeuten;
b) 1 - 4 R³OCH₂-, worin R³ Wasserstoff oder (C₁-C₄)-Alkyl bedeuten; und
c) 0 - 4 einen Rest der allgemeinen Formel II 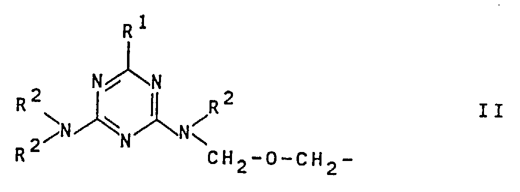 und/oder einen Rest der allgemeinen Formel III 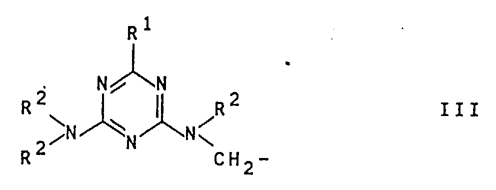 worin
R¹ und R² die oben genannten Bedeutungen haben, bedeuten.

2. Triazin-Formaldehyd-Harz gemäß Anspruch 1, dadurch gekennzeichnet, daß R¹ Di-(C₁-C₆)-Alkylamino bedeutet.

3. Triazin-Formaldehyd-Harz gemäß Anspruch 1 und/oder 2, dadurch gekennzeichnet, daß R¹ Diethylamino bedeutet.

4. Triazin-Formaldehyd-Harz gemäß einem oder mehreren de Ansprüche 1 bis 3, dadurch gekennzeichnet, daß es 60 bis 80 Gew.% einer Verbindung der allgemeinen Formel I gemäß Anspruch 1 und 20 bis 40 Gew.% eines (C₁-C₄)-Alkanols enthält.

5. Verfahren zur Herstellung eines Triazin-Formaldehyd-Harzes gemäß einem oder mehreren der Ansprüche 1 bis 4, dadurch gekennzeichnet, daß eine Verbindung der allgemeinen Formel IV 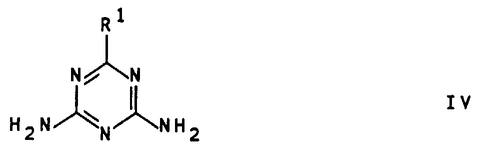 worin R¹ wie in Anspruch 1 angegeben definiert ist, mit Formaldehyd methyloliert, mit einem (C₁-C₄)-Alkanol verethert, entstandenes Wasser entfernt und das so erhaltene Produkt mit einem (C₁-C₄)-Alkanol auf den gewünschten Festkörpergehalt eingestellt wird.

6. Verwendung eines Triazin-Formaldehyd-Harzes gemäß einem oder mehreren der Ansprüche 1 bis 4 als Härter in Lacksystemen auf Basis von hydroxylgruppenhaltigen Alkyd-, Polyester- oder Acrylharzen oder Epoxidharzen und/oder deren Mischungen.

7. Lacksystem auf Basis von hydroxylgruppenhaltigen Alkyd-, Polyester- oder Acrylharzen oder Epoxidharzen und/oder deren Mischungen, dadurch gekennzeichnet, daß es ein Triazin-Formaldehyd-Harz gemäß einem oder mehreren der Ansprüche 1 bis 4 enthält.

8. Lacksystem gemäß Anspruch 7, dadurch gekennzeichnet, daß es wäßrig ist.

9. Lacksystem gemäß Anspruch 7 und/oder 8, dadurch gekennzeichnet, daß es sich um einen Einbrennfüller, Basislack, Klarlack oder Decklack für den Automobilsektor handelt oder um ein Lacksystem für Haushaltsgeräte.

10. Lacksystem gemäß einem oder mehreren der Ansprüche 7 bis 9, dadurch gekennzeichnet, daß das Gewichtsverhältnis Alkyd-, Polyester-, Epoxid- oder Acrylharz zu Triazin-Formaldehyd-Harz gemäß einem oder mehreren der Ansprüche 1 bis 4 60:40 bis 90:10 beträgt.

## Claims

1. Partially or completely etherified triazine/formaldehyde resin, characterized by a content of a compound of the general formula I 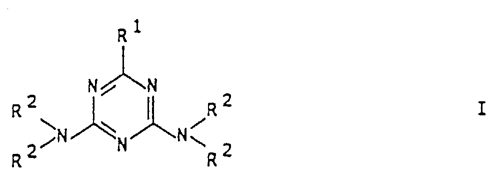 wherein
R¹ denotes di-(C₁-C₆)-alkylamino, dicyclohexylamino, diphenylamino, morpholino, piperidino or pyrrolidino,
and of the four substituents R²
a) 0-3 denote hydrogen,
b) 1-4 denote R³OCH₂-, wherein R³ denotes hydrogen or (C₁-C₄)-alkyl, and
c) 0-4 denote a radical of the general formula II 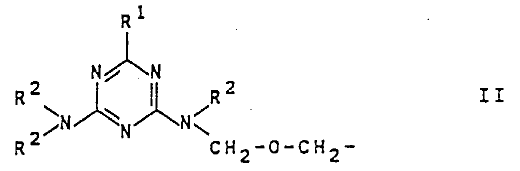 and/or a radical of the general formula III 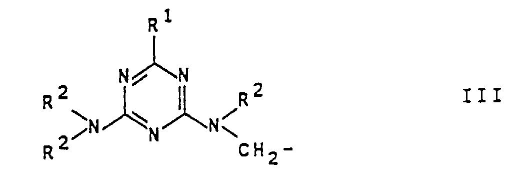 wherein R¹ and R² have the abovementioned meanings.

2. Triazine/formaldehyde resin according to Claim 1, characterized in that R¹ denotes di-(C₁-C₆)-alkylamino.

3. Triazine/formaldehyde resin according to Claim 1 and/or 2, characterized in that R¹ denotes diethylamino.

4. Triazine/formaldehyde resin according to one or more of Claims 1 to 3, characterized in that it contains 60 to 80% by weight of a compound of the general formula I according to Claim 1 and 20 to 40% by weight of a (C₁-C₄)-alkanol.

5. Process for the preparation of a triazine/formaldehyde resin according to one or more of Claims 1 to 4, characterized in that a compound of the general formula IV 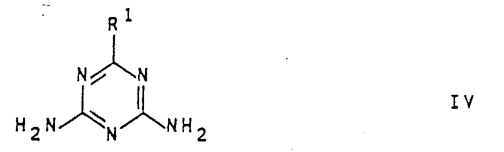 wherein R¹ is defined as stated in Claim 1, is methylolated with formaldehyde, the product is etherified with a (C₁-C₄)-alkanol, water formed is removed and the product thus obtained is adjusted to the desired solids content with a (C₁-C₄)-alkanol.

6. Use of a triazine/formaldehyde resin according to one or more of Claims 1 to 4 as a curing agent in surface coating systems based on alkyd, polyester or acrylate resins containing hydroxyl groups or epoxy resins and/or mixtures thereof.

7. Surface coating system based on alkyd, polyester or acrylate resins containing hydroxyl groups or epoxy resins and/or mixtures thereof, characterized in that it contains a triazine/formaldehyde resin according to one or more of Claims 1 to 4.

8. Surface coating system according to Claim 7, characterized in that it is aqueous.

9. Surface coating system according to Claim 7 and/or 8, characterized in that it is a stoving filler, base coat, clear coat or top coat for the automotive sector or a surface coating system for household appliances.

10. Surface coating system according to one or more of Claims 7 to 9, characterized in that the weight ratio of alkyd, polyester, epoxy or acrylate resin to triazine/formaldehyde resin according to one or more of Claims 1 to 4 is 60 : 40 to 90 : 10.

## Revendications

1. Résine triazine-formaldéhyde partiellement éthérifiée, caractérisée par une teneur en un composé de formule générale I 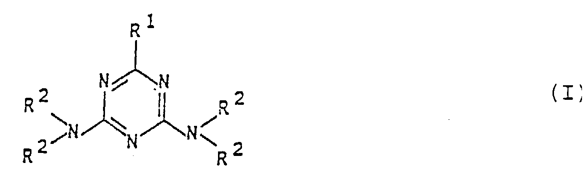 dans laquelle
R¹ représente di(alkyl en C₁-C₆)amine, dicyclohexylamino, diphénylamino, morpholino, pipéridino ou pyrrolidino ;
et des quatre substituants R²
a) de 0 à 3 représentent des atomes d'hydrogène
b) de 1 à 4 représentent des groupes R³OCH₂-, dans lequel R³ est l'hydrogène- ou alkyle en C₁-C₄ ; et
c) de 0 à 4 restes de formule générale II 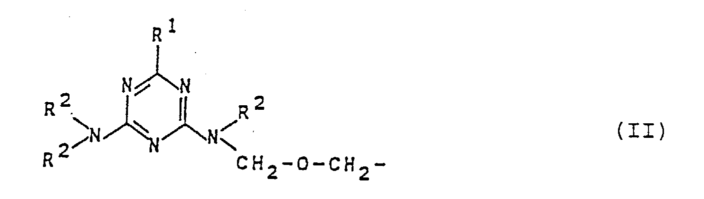 et/ou un reste de formule générale III 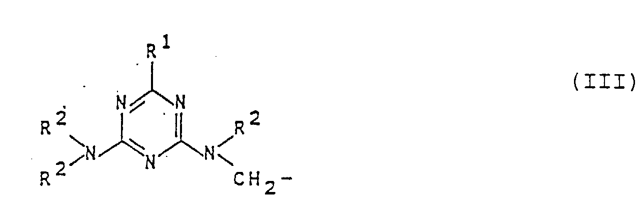 dans laquelle
R¹ et R² ont les significations données ci-dessus.

2. Résine triazine-formaldéhyde selon la revendication 1, caractérisée en ce que R¹ représente di(alkyl en C₁-C₆)amino.

3. Résine triazine-formaldéhyde selon la revendication 1 et/ou 2, caractérisée en ce que R¹ représente diéthylamino.

4. Résine triazine-formaldéhyde selon l'une ou plusieurs des revendications 1 à 3, caractérisée en ce qu'elle a une teneur de 60 à 80 % en poids en un composé de formule générale I selon la revendication 1 et de 20 à 40 % en poids en un alcanol en C₁-C₄.

5. Procédé pour la préparation d'une résine triazine-formaldyde selon une ou plusieurs des revendications 1 à 4, caractérisé en ce qu'on méthylole par le formaldéhyde un composé de formule générale (IV) 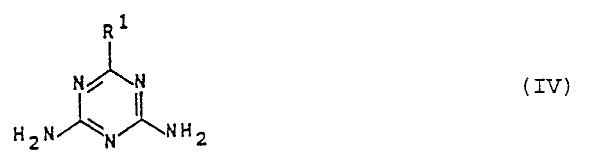 dans laquelle R¹ est défini dans la revendication 1, on l'éthérifie par un alcanol en C₁-C₄, on élimine l'eau formée et on établit dans le produit obtenu, à l'aide d'un alcanol en C₁-C₄, la teneur en extrait sec voulue.

6. Utilisation d'une résine triazine-formaldéhyde selon une ou plusieurs des revendications 1 à 4, comme durcisseur dans des systèmes de vernis à base de résines hydroxylées alkydes, polyester ou acryliques ou de résines époxydes et/ou de leurs mélanges.

7. Système de vernis à base de résines hydroxylées alkydes, polyester ou acryliques ou de résines époxydes et/ou de leurs mélanges, caractérisé en ce qu'il comporte une résine triazine-formaldéhyde selon une ou plusieurs revendications 1 à 4.

8. Système de vernis selon la revendication 7, caractérisé en ce qu'il s'agit d'un système aqueux.

9. Système de vernis selon la revendication 7 et/ou 8, caractérisé, en qu'il s'agit d'une charge pour cuisson, d'un vernis de base, d'un vernis clair (non pigmenté) ou d'un vernis couvrant pour le secteur d'automobile ou qu'il s'agit d'un système de vernis pour appareils ménagers.

10. Système de vernis selon une ou plusieurs des revendications 7 à 9, caractérisé en ce que le rapport pondéral de la résine alkyde, polyester, époxyde ou acrylique à la résine triazine-formaldéhyde selon une ou plusieurs des revendications 1 à 4, est de 60:40 à 90:10.
